# EUROPÄISCHE PATENTANMELDUNG

(11) **EP 4 593 279 A1**
(43) Veröffentlichungstag der Anmeldung: **30.07.2025**
(21) Anmeldenummer: 24153958.4
(22) Anmeldetag: 25.01.2024
(51) Int. Cl.: H02M 7/483, H02M 7/487

(54) **SYMMETRIERUNG DER TEILZWISCHENKREISSPANNUNGEN EINES 3-PUNKT NPC NETZUMRICHTERS**

(71) Anmelder: Siemens Aktiengesellschaft, 80333 München (DE)
(72) Erfinder: Benesch, Norbert, 90562 Heroldsberg (DE); Franz, Steffen, 91315 Höchstadt an der Aisch (DE); Nemeth-Csoka, Mihaly, 91056 Erlangen (DE); Wedel, Bernd, 91096 Möhrendorf (DE)
(74) Vertreter: Siemens Patent Attorneys

(57) **Zusammenfassung**

Die Erfindung betrifft ein Symmetrierungsverfahren (1) zur Symmetrierung von Teilspannungen (U_{DC1},U_{DC1}) elektrischer Kondensatoren (6,7) am Gleichspannungskreis (2) eines Multilevel-Umrichters (3) mit einem Gleichrichter (33), wobei der Gleichrichter (33) zwischen einem Wechselspannungsnetz (5) und dem Gleichspannungskreis (2) betrieben wird, wobei ein erster Kondensator (6) und ein elektrisch mit dem ersten Kondensator (6) in Reihe verschalteter zweiter Kondensator (7), welche einen Symmetriepunkt (22) ausbilden, zwischen einer ersten und zweiten Gleichspannungsphase (DC+,DC-) des Gleichspannungskreises (2) an einer Gleichspannung (U_{DC}) betrieben werden, wobei ein Wirkstromsollwert (I_{Wsoll}) für einen Wirkstrom (I_{W}) des Wechselspannungsnetzes (5) mit einem oberschwingungsbehaftetem Zusatzstromwert (I_{Z}) beaufschlagt wird und eine erste Teilspannung (U_{DC1}) der Gleichspannung (U_{DC}) am ersten Kondensator (6) und/oder eine zweite Teilspannung (U_{DC2}) der Gleichspannung (U_{DC}) am zweiten Kondensator (7) in Abhängigkeit des oberschwingungsbehafteten Zusatzstromwerts (I_{Z}) am Symmetriepunkt (22) zur Erzeugung einer Symmetrie zwischen der ersten Teilspannung (U_{DC1}) und der zweiten Teilspannung (U_{DC2}) verändert werden/wird. Ferner betrifft die Erfindung eine Symmetrierungsvorrichtung (11) zur Durchführung des Symmetrierungsverfahrens (1) und einen Multilevel-Umrichter (3) mit der Symmetrierungsvorrichtung (11).

## Beschreibung

Die Erfindung betrifft ein Symmetrierungsverfahren zur Symmetrierung von Teilspannungen elektrischer Kondensatoren am Gleichspannungskreis eines Multilevel-Umrichters mit einem Gleichrichter, wobei der Gleichrichter zwischen einem Wechselspannungsnetz und dem Gleichspannungskreis betrieben wird, wobei ein erster Kondensator und ein elektrisch mit dem ersten Kondensator in Reihe verschalteter zweiter Kondensator, welche einen Symmetriepunkt ausbilden, zwischen einer ersten und zweiten Gleichspannungsphase des Gleichspannungskreises an einer Gleichspannung betrieben werden und wobei eine erste Teilspannung der Gleichspannung über dem ersten Kondensator und eine zweite Teilspannung der Gleichspannung über dem zweiten Kondensator erzeugt wird. Weiterhin betrifft die Erfindung eine Symmetrierungsvorrichtung zur Durchführung des Symmetrierungsverfahrens sowie einen Multilevel-Umrichter mit der Symmetrierungsvorrichtung.

Frequenzumrichter, welche an ihrem Gleichspannungskreis - auch als Gleichspannungszwischenkreis bekannt - mehr als zwei Spannungslevel - auch Spannungsstufen genannt - bereitstellen und in diesem Kontext auch als Multilevel-Umrichter bezeichnet werden, weisen zwischen den Gleichspannungsphasen des Gleichspannungskreises zumindest zwei in Reihe verschaltete und eine Gesamtkapazität bildende Gleichspannungskreiskondensatoren auf.

Über diesen Kondensatoren fällt jeweils eine Teilspannung ab, deren Summe die Gleichspannung am Gleichspannungskreis ergibt. Aufgrund von beispielsweise Fertigungstoleranzen der Kondensatoren - wie auch deren alterungsbedingter Verschleiß - ist oftmals ein Auseinanderdriften der Teilspannungen an den Kondensatoren zu erwarten. Als Konsequenz treten unerwünscht hohe Teilspannungen an zumindest einigen der Kondensatoren auf, so dass die davon betroffenen Kondensatoren beschädigt oder darüber hinaus auch zerstört werden können.

Auch hat das Auseinanderdriften der Teilspannungen zur Folge, dass der Spannungssollwert für die gewünschten Spannungslevel am Gleichspannungskreis nur verzerrt und nicht präzise ausgegeben werden kann.

Demnach sind sowohl zur Vermeidung von Überspannung an den Kondensatoren des Gleichspannungskreises - wie auch für ein korrektes Stellen einer z.B. wechselspannungsseitigen Netzspannung der Eingangsspannung des Gleichrichters - gleiche Spannungswerte in der oberen und unteren Hälfte des Gleichspannungskreises anzustreben.

Es müssen demnach Mittel bereitgestellt werden, welche im Betriebsfall des Umrichters die Teilspannungen über den Kondensatoren symmetrieren, also fortlaufend gegeneinander angleichen, um eine unerwünschte Erhöhung dieser Teilspannungen bzw. deren Auseinanderdriften zu verhindern.

Das Symmetrieren der Teilspannungen kann mit Hilfe eines Balancierungsreglers erreicht werden, welcher dafür sorgt, dass die einzelnen Spannungslevel am Gleichspannungskreis den gleichen Spannungswert aufweisen.

Ein entsprechender Stelleingriff bisher bekannter Balancierungsregler beeinflusst jedoch das sogenannte Nullsystem des betroffen Spannungssystems in unerwünschter Weise, wie beispielsweise das des z.B. wechselspannungsseitigen Netzspannungssystems.

Unter Verwendung einer herkömmlichen Raumzeigermodulation zur Erzeugung der Schaltsignale für die Leistungshalbleiterschalter des Gleichrichters erfolgt die Ausbildung des Nullsystems am z.B. wechselspannungsseitigen Netzspannungssystem derart, dass bei einer vorgegebenen Zwischenkreisspannung am Gleichspannungskreis die maximal mögliche verkettete Spannung der wechselspannungsseitigen Netzspannung ausgegeben werden kann.

Durch einen im Nullsystem erzeugten Offset kann die Gleichtaktspannung der Leiterspannungen dieses wechselspannungsseitigen Netzspannungssystems verschoben werden.

Bei einem 3 Level-Umrichter ist es beispielsweise möglich, den Kondensator an der oberen Hälfte des Gleichspannungskreises stärker zu laden und somit dessen Teilspannung gegenüber dem Kondensator an der unteren Hälfte des Gleichspannungskreises zu erhöhen, wenn der Offset im Nullsystem - bei positiver Wirkleistung - einen positiven Wert annimmt.

Bei diskontinuierlichen Modulationsverfahren oder auch Flat-Modulationsverfahren, kann der Offset des Nullsystems so gewählt werden, das einzelne Phasen einer Brückenschaltung des Gleichrichters zu bestimmten Zeiten nicht geschaltet werden. In diesen Fällen kann eine Reduzierung von Schaltverlusten in den Leistungshalbleiterschaltern, beispielsweise im Bereich eines Strommaximums einer Netzphase des wechselspannungsseitigen Netzspannungssystems, erzielt werden.

Ein Nachteil in diesem Kontext ist jedoch, dass das Nullsystem als Stellgröße zur Balancierung der Teilspannungen am Gleichspannungskreis nicht mehr oder nur im eingeschränkten Umfang zur Verfügung gestellt werden kann.

Die Wahl einer beispielsweise Flat-Modulation zur Minimierung der Verlustleistung des Gleichrichters oder zur Optimierung einer Common-Mode-Störung widerspricht demnach einer optimalen Wahl der Modulationsart, welche für eine Balancierung bzw. Symmetrierung der Teilspannungen über den Kondensatoren am Gleichspannungskreis gegeben wäre, wobei die Stellgröße des Nullsystems so nicht den verschiedenen Regelungszielen genügt.

Aktuell kommen beispielsweise Hystereseregler zum Einsatz, welche zwischen Top- und Bot-Modulation umschalten und dabei jedoch große Störanregungen, beispielsweise im Common-Mode-System, erzeugen.

Eine andere Möglichkeit, welche ebenfalls auf dem Nullsystem als Stellgröße aufbaut, ergibt sich durch eine Beeinflussung von Umschaltzeiten zwischen einer Top-Modulation und einer Bottom-Modulation der Flat-Modulation, wobei eine der genannten Variante dann zeitlich länger aktiv ist.

Der Erfindung liegt die Aufgabe zugrunde, ein Symmetrierungsverfahren zur gegenüber dem Stand der Technik verbesserten Symmetrierung von Teilspannungen elektrischer Kondensatoren am Gleichspannungskreis eines Multilevel-Umrichters mit einem Gleichrichter sowie in Verbindung dazu eine Symmetrierungsvorrichtung zur Durchführung des Symmetrierungsverfahren und einen Multilevel-Umrichter mit der Symmetrierungsvorrichtung vorzuschlagen.

Die Aufgabe wird durch ein Symmetrierungsverfahren mit den in Anspruch 1 angegebenen Merkmalen, eine Symmetrierungsvorrichtung zur Durchführung des Symmetrierungsverfahrens gemäß den in Anspruch 13 angegebenen Merkmalen und einen Multilevel-Umrichter mit der Symmetrierungsvorrichtung gemäß den in Anspruch 15 angegebenen Merkmalen gelöst.

Für die Lösung der Aufgabe wird ein Symmetrierungsverfahren zur Symmetrierung von Teilspannungen elektrischer Kondensatoren am Gleichspannungskreis eines Multilevel-Umrichters mit einem Gleichrichter vorgeschlagen, wobei der Gleichrichter zwischen einem Wechselspannungsnetz und dem Gleichspannungskreis betrieben wird, wobei ein erster Kondensator und ein elektrisch mit dem ersten Kondensator in Reihe verschalteter zweiter Kondensator, welche einen Symmetriepunkt ausbilden, zwischen einer ersten und zweiten Gleichspannungsphase des Gleichspannungskreises an einer Gleichspannung betrieben werden, wobei ein Wirkstromsollwert für einen Wirkstrom des Wechselspannungsnetzes mit einem oberschwingungsbehaftetem Zusatzstromwert beaufschlagt wird und eine erste Teilspannung der Gleichspannung am ersten Kondensator und/oder eine zweite Teilspannung der Gleichspannung am zweiten Kondensator in Abhängigkeit des oberschwingungsbehafteten Zusatzstromwerts am Symmetriepunkt zur Erzeugung einer Symmetrie zwischen der ersten Teilspannung und der zweiten Teilspannung verändert werden/wird.

Die zumindest beiden Kondensatoren - der erste und der zweite Kondensator - bilden eine Gesamtkapazität am Gleichspannungskreis aus, wobei die Aufteilung in weitere Kondensatoren zur Bildung der Gesamtkapazität möglich ist und die Symmetrierung der jeweiligen Teilspannungen der eingesetzten Kondensatoren gemäß dem Symmetrierungsverfahren am Symmetriepunkt erfolgt.

Multilevel-Umrichter weisen als Ausbildungen ihrer Gleichrichter neben einer ersten Brückenschaltung - beispielsweise einer Sechspuls-Brückenschaltung - oft eine weitere Schaltvorrichtung - beispielsweise in Form einer ersten erste bidirektionale Schaltvorrichtung - auf, welche das Stellen der Spannungslevel des Multilevel-Umrichters am Gleichspannungskreis unterstützt.

Das erfindungsgemäße Symmetrierungsverfahren wird für verschiedene Arten/Typen von Multilevel-Umrichtern angewendet, so z.B. für Multilevel-Umrichter, welche mittels des Gleichrichters Energie aus dem Gleichspannungskreis in das Wechselspannungsnetz zurückspeisen können oder bei Anwendung eines z.B. bekannten Vienna-Gleichrichters auch nicht, für T-Type Multilevel-Umrichter und für NPC (Neutral Point Clamped) Multilevel-Umrichter.

Mittels des Gleichrichters des Multilevel-Umrichters kann - soweit die erste Brückenschaltung des Gleichrichters Leistungshalbleiterschalter aufweist - demnach eine Rückspeisung elektrischer Energie aus dem Gleichspannungskreis in das Wechselspannungsnetz erfolgen. Ebenfalls ist mit dem Gleichrichter eine Eingriffsmöglichkeit auf die Wechselspannung am Wechselspannungsnetz eingangsseitig des Multilevel-Umrichters vorgesehen, um die gewünschte Gleichspannung am Gleichspannungskreis zu erhalten.

Die Symmetrie der Teilspannungen an den elektrischen Kondensatoren am Gleichspannungskreis hat dabei Einfluss auf die Qualität der am Gleichspannungskreis zu regelnden Gleichspannung sowie bei der Rückspeisung der elektrischen Energie in das Wechselspannungsnetz auch auf deren Wechselspannung, da eine Unsymmetrie dieser Teilspannungen im Allgemeinen eine Verzerrung bei der Ausgabe von Sollwerten für die am Gleichspannungskreis anliegende Gleichspannung bewirkt.

Ferner verhindert die sich mittels des Symmetrierungsverfahren einstellende Symmetrie der Teilspannungen Überspannungen an den Kondensatoren des Gleichspannungskreises, da eine unzulässige Erhöhung einer der Teilspannungen durch die Anpassung der weiteren Teilspannungen kompensiert und somit verhindert wird.

Das vorgeschlagene Symmetrierungsverfahren nutzt für die Symmetrierung der Teilspannungen dazu in vorteilhafter Weise den Wirkstromsollwert des Wechselspannungsnetzes bei einer Reglung, welche die Energiebereitstellung am Multilevel-Umrichter je nach Betriebsart Einspeisung vs. Rückspeisung bestimmt, um durch Aufschaltung des oberschwingungsbehafteten Zusatzstromwerts eine Erhöhung bzw. Reduzierung der jeweiligen Teilspannungen an den Kondensatoren am Gleichspannungskreis vorzunehmen, bis sich die Symmetrie der Teilspannungen einstellt bzw. wieder einstellt.

Dabei wird das Nullsystem des Wechselspannungssystems, welches für die Reglung des Gleichrichters zur Bereitstellung der elektrischen Energie des Multilevel-Umrichters, z.B. mittels besonders geeigneter Flat-Top-Modulation oder Flat-Middle-Modulation für Leistungshalbleiterschalter der ersten Brückenschaltung des Gleichrichters, vorgebbar ist, durch das Symmetrierungsverfahren im Sinne seiner bestimmungsgemäßen Funktion nicht beeinflusst, da eine Spannungsmodulation über den Wirkstromsollwert und die Aufschaltung des oberschwingungsbehafteten Zusatzstromwerts phasengleich zum Nullsystem der Wechselspannung erfolgt.

Vorteilhafte Ausgestaltungsformen des Synchronisierungsverfahrens sind in den abhängigen Ansprüchen angegeben.

Bei einer ersten vorteilhaften Ausgestaltungsform des Symmetrierungsverfahrens wird der oberschwingungsbehaftete Zusatzstromwert in Abhängigkeit einer mit einem Differenzbildungsglied ermittelten Spannungsdifferenz der Teilspannungen einstellt.

Das Differenzbildungsglied ermittelt demnach in vorteilhafter Weise - soweit vorhanden - die Spannungsdifferenz der Teilspannungen, welche im Ergebnis durch die Aufschaltung des oberschwingungsbehafteten Zusatzstromwert auf den Wirkstromsollwert ausgeglichen wird.

Bei einer weiteren vorteilhaften Ausgestaltungsform des Symmetrierungsverfahrens ist der oberschwingungsbehaftete Zusatzstromwert in Abhängigkeit von einem mindestens 3-Fachen einer Netzfrequenz oder eines Netzwinkels des Wechselspannungsnetzes ausgebildet.

Mit dem 3-Fachen der Netzfrequenz der Wechselspannung, welche in den Netzwinkel der Wechselspannung überführbar ist, stellt sich eine verbesserte Wirkung des Symmetrierungsverfahrens in vorteilhafter Weise ein, da unerwünschte Nebenwirkungen in Bezug auf erzeugte Oberschwingungsanteile im Strom des Wechselspannungsnetzes reduziert werden bzw. eine Oberwelligkeit der Gleichspannung am Gleichspannungskreis zumindest verringert wird.

Die Überführung des Netzwinkels aus der Netzfrequenz lässt sich aus der folgenden Beziehung φ = f_{N}*t herleiten, wobei φ der Netzwinkel, f_{N} die Netzfrequenz und t die Zeit ist. Der Netzwinkel kann z.B. über eine Periode der Wechselspannung des Wechselspannungsnetzes in einem Alpha-/Beta-Koordinatensystem - auch Clarke-Transformation oder statorfestes Transformationssystem genannt - ermittelt werden.

Bei einer weiteren vorteilhaften Ausgestaltungsform des Symmetrierungsverfahrens ist der oberschwingungsbehaftete Zusatzstromwert mit dem mindestens 3-Fachen der Netzfrequenz oder des Netzwinkels des Wechselspannungsnetzes als Rechteck-Funktion oder Sinus-Funktion oder Cosinus-Funktion oder als Kombination von Sinus-Funktion und Cosinus-Funktion ausgebildet.

Neben der Ausprägung des oberschwingungsbehafteten Zusatzstromwerts mit dem 3-Fachen der Netzfrequenz der Wechselspannung stellt sich mittels dieser Ausgestaltungsform auch eine verbesserte Wirkung des Symmetrierungsverfahrens in vorteilhafter Weise ein, da die unerwünschten Nebenwirkungen in Bezug auf erzeugte Oberschwingungsanteile im Strom des Wechselspannungsnetzes ebenfalls reduziert werden bzw. eine Oberwelligkeit der Gleichspannung am Gleichspannungskreis ebenfalls verringert wird.

Bei einer weiteren vorteilhaften Ausgestaltungsform des Symmetrierungsverfahrens weist der mit dem mindestens 3-Fachen der Netzfrequenz oder des Netzwinkels des Wechselspannungsnetzes als Sinus-Funktion oder als Cosinus-Funktion oder als Kombination von Sinus-Funktion und Cosinus-Funktionen ausgebildete oberschwingungsbehaftete Zusatzstromwert eine ungeradzahlige Potenz, insbesondere eine dritte Potenz, der Sinus-Funktion oder der Cosinus-Funktion oder der Kombination von Sinus-Funktion und Cosinus-Funktionen auf.

Neben der Ausprägung des oberschwingungsbehafteten Zusatzstromwerts mit dem 3-Fachen der Netzfrequenz der Wechselspannung und der ungeradzahligen Potenz der Sinus-Funktion oder der Cosinus-Funktion oder der Kombination von Sinus-Funktion und Cosinus-Funktionen stellt sich mittels dieser vorteilhaften Ausgestaltungsform des Symmetrierungsverfahrens weiterhin eine verbesserte Wirkung des Symmetrierungsverfahrens in vorteilhafter Weise ein, da die unerwünschten Nebenwirkungen in Bezug auf erzeugte Oberschwingungsanteile im Strom des Wechselspannungsnetzes ebenfalls reduziert werden bzw. eine Oberwelligkeit der Gleichspannung am Gleichspannungskreis ebenfalls verringert wird.

Bei einer weiteren vorteilhaften Ausgestaltungsform des Symmetrierungsverfahrens ist der oberschwingungsbehaftete Zusatzstromwert abhängig von einer Nullsystemspannung des Wechselspannungsnetzes.

Die Nullsystemspannung des Wechselspannungsnetzes wird im Allgemeinen durch die erste Brückenschaltung des Gleichrichters mittels deren Leistungshalbleiterschalter erzeugt. Der oberschwingungsbehaftete Zusatzstromwert ist dabei vorzugsweise proportional zu der Nullsystemspannung des Wechselspannungsnetzes auf den Wirkstromsollwert aufzuschalten.

Besonders effektiv lässt sich das Symmetrierungsverfahren bei Modulationsverfahren einsetzen, wie Pulsweitenmodulationen (PWM), welche das Nullsystem z.B. mittels der Flat-Top-Modulation oder der Flat-Middle-Modulation vorgeben. Diese Modulationsarten können bei Wahl eines geeigneten Offsets im Nullsystem die Schaltverluste der schaltbaren Leistungshalbleiter signifikant reduzieren.

Demnach ist der oberschwingungsbehaftete Zusatzstromwert zwar von der Nullsystemspannung abhängig, sollte aber das Nullsystem selbst bzw. dessen Vorteile nicht oder nicht signifikant beeinflussen.

Bei einer weiteren vorteilhaften Ausgestaltungsform des Symmetrierungsverfahrens ist der oberschwingungsbehaftete Zusatzstromwert in Abhängigkeit einer mittels des Wirkstroms eingespeisten oder - falls möglich - rückgespeisten Wirkleistung am Gleichrichter vorzeichenbehaftet.

Die Vorzeichenbehaftung des oberschwingungsbehafteten Zusatzstromwerts bewirkt, dass die Symmetrierung der Teilspannungen an den Kondensatoren des Gleichspannungskreises in vorteilhafter Weise sowohl für einen Betrieb des Gleichrichters des Multilevel-Umrichters bei der Einspeisung von Wirkleistung in den Gleichspannungskreis (Gleichrichterbetrieb) wie auch - falls möglich - bei der Rückspeisung von Wirkleistung in das Wechselspannungsnetz (Wechselrichterbetrieb) eingesetzt wird.

Bei einer weiteren vorteilhaften Ausgestaltungsform des Symmetrierungsverfahrens wird der oberschwingungsbehaftete Zusatzstromwert zumindest mittels einer Proportionalverstärkung eines Proportionalreglers gebildet.

Bei einer weiteren vorteilhaften Ausgestaltungsform des Symmetrierungsverfahrens wird der oberschwingungsbehaftete Zusatzstromwert als zu addierender oberschwingungsbehafteter Zusatzstromwert mit dem Wirkstromsollwert addiert.

Soweit eine Vorzeichenbehaftung des oberschwingungsbehafteten Zusatzstromwerts vorgesehen ist, wird dies bei der Addition des oberschwingungsbehafteten Zusatzstromwerts mit dem Wirkleistungssollwert berücksichtigt, um den Betrieb Einspeisung der Wirkleistung vs. - falls möglich - Rückspeisung der Wirkleistung abzubilden.

Bei einer weiteren vorteilhaften Ausgestaltungsform des Symmetrierungsverfahrens wird der oberschwingungsbehaftete Zusatzstromwert mittels eines Normierungsglieds als zu multiplizierender oberschwingungsbehafteter Zusatzstromwert mit dem Wirkstromsollwert multipliziert.

Soweit eine Vorzeichenbehaftung des oberschwingungsbehafteten Zusatzstromwerts vorgesehen ist, wird dies bei der Multiplikation des oberschwingungsbehafteten Zusatzstromwerts mit dem Wirkleistungssollwert berücksichtigt, um den Betrieb Einspeisung der Wirkleistung vs. - falls möglich - Rückspeisung der Wirkleistung abzubilden.

Bei einer weiteren vorteilhaften Ausgestaltungsform des Symmetrierungsverfahrens wird der mit dem oberschwingungsbehafteten Zusatzstromwert beaufschlagte Wirkstromsollwert für den Wirkstrom im Wechselspannungsnetz mittels einer d/q-Transformation ermittelt.

Die d/q-Transformation, auch Park-Transformation oder rotorfeste Transformation genannt, kommt z.B. für ein Raumzeigermodel in PWM-Modulationsarten oft zum Einsatz, um dreiphasige elektrische Größen eines Drehstromsystems in ein zweiachsiges Koordinatensystem mit den Achsen d (d-Anteil z.B. Erregerstrom einer elektrischen Maschine) und q (q-Anteil z.B. momentbildender Strom der elektrischen Maschine) zu überführen.

Es sei darauf hingewiesen, dass z.B. eine 3-fache Oberschwingung in einem elektrischen Netz mittels der d/q-Transformation ein "Rückdrehen" um eine Grundfrequenz bewirkt, wobei aus der 3-fachen Oberschwingung eine mindestens 2-fache Oberschwingung im d/q-System erzeugt wird.

An dieser Stelle ist es für das Symmetrierungsverfahren vorteilhaft, den Wirkstromsollwert (hier den d-Anteil des Stromes) mit dem oberschwingungsbehafteten Zusatzstromwert zu beaufschlagen.

Bei einer weiteren vorteilhaften Ausgestaltungsform des Symmetrierungsverfahrens wird der mit dem oberschwingungsbehafteten Zusatzstromwert beaufschlagte Wirkstromsollwert mittels einer Alpha-/Beta-Transformation oder mittels einer komplexen Berechnung des Wechselspannungsnetzes, welches insbesondere dreiphasig ausgebildet ist, ermittelt.

Neben dem Einsatz der d/q-Transformation zur Beaufschlagung des oberschwingungsbehafteten Zusatzstromwerts auf den Wirkstromsollwert können in vorteilhafter Weise weitere Transformationsarten wie die Alpha-/Beta-Transformation, auch Clarke-Transformation oder statorfeste Transformation genannt, bzw. eine komplexe Berechnung des Wechselspannungsnetzes als dreiphasiges Drehstromsystem mit dem jeweils vorgebbaren Wirkstromsollwert zum Einsatz kommen.

Für die Lösung der Aufgabe wird weiterhin eine Symmetrierungsvorrichtung - ausgebildet zur Durchführung des erfindungsgemäßen Symmetrierungsverfahrens - vorgeschlagen, aufweisend den Gleichrichter des Multilevel-Umrichters und den ersten und zweiten Kondensator am Gleichspannungskreis, wobei der Gleichrichter für den Betrieb zwischen dem Wechselspannungsnetz und dem Gleichspannungskreis elektrisch verschaltbar ist und der erste Kondensator, elektrisch in Reihe verschaltet mit dem zweiten Kondensator, zwischen der ersten und zweiten Gleichspannungsphase des Gleichspannungskreises elektrisch verbunden ist.

Bei einer ersten vorteilhaften Ausgestaltungsform der Symmetrierungsvorrichtung weist die Symmetrierungsvorrichtung eine Recheneinheit mit einem Symmetrierungsregler auf, ausgebildet zur Durchführung des Symmetrierungsverfahrens.

Für die Lösung der Aufgabe wird weiterhin ein Multilevel-Umrichter mit der erfindungsgemäßen Symmetrierungsvorrichtung vorgeschlagen, welcher für einen Betrieb eines elektrischen Verbrauchers oder eines elektrischen Erzeugers oder eines elektrischen Netzes an einem Wechselspannungsnetz ausgebildet ist.

Die Symmetrierungsvorrichtung zur Durchführung des erfindungsgemäßen Symmetrierungsverfahrens ist für Multilevel-Umrichter in vorteilhafter Weise unabhängig einsetzbar, gleich, ob z.B. als Verbraucher eine für eine mechanische Last motorisch betriebene elektrische Maschine oder als Erzeuger eine von einer mechanischen Last generatorisch betriebene elektrische Maschine oder ein elektrisches Netz ohne konkreten Nachweis über eine Herkunft einer elektrischen Belastung betrieben wird.

In all diesen Fällen werden die Teilspannungen der Kondensatoren am Gleichspannungskreis gemäß dem Symmetrierungsverfahren symmetriert und dabei das eingestellte Nullspannungssystem des Wechselspannungsnetzes nicht oder nur in nicht signifikantem Maße beeinflusst.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Es zeigt:
FIG 1 eine schematische Darstellung des erfindungsgemäßen Symmetrierungsverfahrens, ausgeführt mit einer Symmetrierungsvorrichtung eines Multilevel-Umrichters,
FIG 2 eine erste schematische Darstellung eines Symmetrierungsreglers der Symmetrierungsvorrichtung zur Ausführung des erfindungsgemäßen Symmetrierungsverfahrens gemäß FIG 1,
FIG 3 eine weitere schematische Darstellung des Symmetrierungsreglers der Symmetrierungsvorrichtung zur Ausführung des erfindungsgemäßen Symmetrierungsverfahrens gemäß FIG 1 und
FIG 4 eine schematische Diagrammdarstellung von Signalverläufen für das erfindungsgemäße Symmetrierungsverfahren gemäß FIG 1.

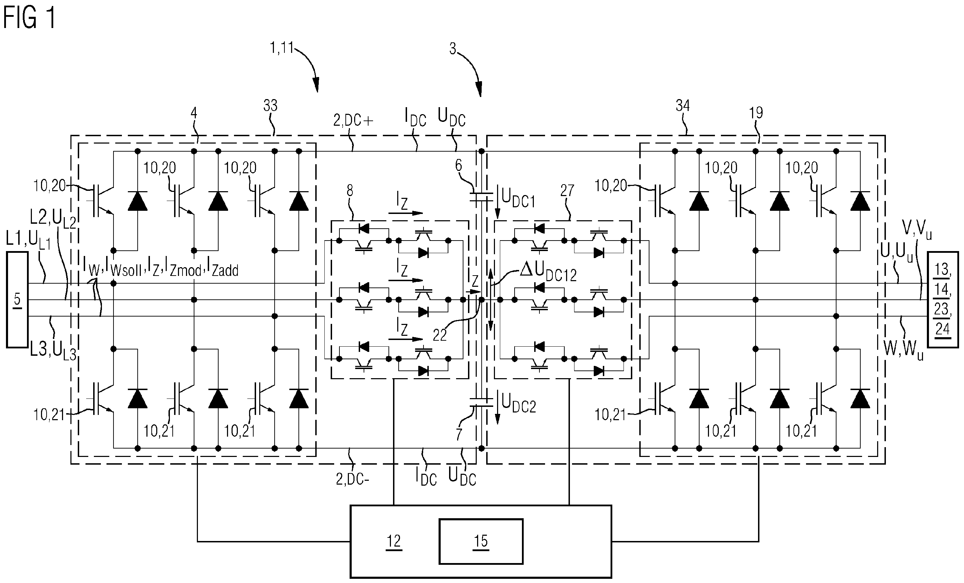

Die FIG 1 zeigt die schematische Darstellung des erfindungsgemäßen Symmetrierungsverfahrens 1, ausgeführt mit einer Symmetrierungsvorrichtung 11 eines Multilevel-Umrichters 3.

Der Multilevel-Umrichter 3 weist einen Gleichrichter 33, einen Gleichspannungskreis 2, oft auch als Gleichspannungszwischenkreis bezeichnet, und für das Ausführungsbeispiel einen Wechselrichter 34 auf.

Ferner weist der Gleichrichter 33 eine erste Brückenschaltung 4 - hier eine B6-Brücke - sowie eine erste bidirektionale Schaltvorrichtung 8 und der Wechselrichter 34 eine zweite Brückenschaltung 19 - hier eine weitere B6-Brücke - sowie eine zweite bidirektionale Schaltvorrichtung 27 auf.

Der Multilevel-Umrichter 3 wird eingangsseitig an einem Wechselspannungsnetz 5 betrieben, welches in dem Ausführungsbeispiel als ein Drehstromsystem mit Wechselspannungsphasen L1,L2,L3 ausgebildet ist. An der Wechselspannungsphase L1 liegt die Wechselspannung U_{L1}, an der Wechselspannungsphase L2 die Wechselspannung U_{L2} und an der Wechselspannungsphase L3 die Wechselspannung U_{L3} an. Die Wechselspannungsphasen L1,L2,L3 sind eingangsseitig des Gleichrichters 33 mit dessen erster Brückenschaltung 4 und erster bidirektionaler Schaltvorrichtung 8 verbunden.

An dem Gleichspannungskreis 2 liegt an der ersten Gleichspannungsphase DC+ und der zweiten Gleichspannungsphase DC- die Gleichspannung U_{DC} an, wobei durch die Gleichspannungsphasen DC+,DC- ein Gleichstrom I_{DC} fließt. Der Gleichspannungskreis 2 ist eingangsseitig mit der ersten Brückenschaltung 4 des Gleichrichters 33 und ausgangsseitig mit der zweiten Brückenschaltung 19 des Wechselrichters 34 elektrisch verbunden.

Ausgangsseitig weist der Wechselrichter 34 ein Drehstromsystem mit Wechselspannungsphasen U,V,W auf, welche mit einem elektrischen Verbraucher 13, z.B. einer motorisch betriebenen elektrischen Maschine 24, einem elektrischen Erzeuger 23, z.B. der generatorisch betriebenen elektrischen Maschine 24 oder einem elektrischen Netz 14 verbunden sind.

Ausgangsseitig des Wechselrichters 34 und des Multilevel-Umrichters 3 liegt an der Wechselspannungsphase U die Wechselspannung Uu, an der Wechselspannungsphase V die Wechselspannung Uv und an der Wechselspannungsphase W die Wechselspannung Uw an.

Die Wechselspannungsphasen U,V,W sind ausgangsseitig des Wechselrichters 34 mit dessen zweiter Brückenschaltung 19 und dessen zweiter bidirektionaler Schaltvorrichtung 27 verbunden.

Die konkrete elektrische Belastung des elektrischen Netzes 14 (eingespeistes elektrisches Netz 14 oder rückspeisendes elektrisches Netz 14) ist hier unbestimmt dargestellt.

Sowohl die erste Brückenschaltung 4 und die erste bidirektionale Schaltvorrichtung 8 des Gleichrichter 33, wie auch die zweite Brückenschaltung 19 und die zweite bidirektionale Schaltvorrichtung 27 des Wechselrichters 34, weisen in FIG 1 jeweils Leistungshalbleiterschalter 10 auf. Diese sind im Ausführungsbeispiel der FIG 1 als Sechspuls-Brückenschaltung (B6-Brücke) angeordnet und ausgebildet.

Die jeweilige Anordnung und Ausbildung der Leistungshalbleiterschalter 10 für die erste Brückenschaltung 4 des Gleichrichters 33, wie auch für die zweite Brückenschaltung des Wechselrichters 34, weisen demnach jeweils Top-Leistungshalbleiterschalter 20 (obere Leistungshalbleiterschalter) und Bottom-Leistungshalbleiterschalter 21 (untere Leistungshalbleiterschalter) der jeweiligen Sechspuls-Brückenschaltung auf.

Ist insbesondere die erste Brückenschaltung 4 des Gleichrichters 33 - wie in FIG 1 gezeigt - mit Leistungshalbleiterschaltern 10 ausgebildet, ist ein Rückspeisen von Energie aus dem Gleichspannungskreis 2 in das Wechselspannungsnetz 5 möglich.

Die erste Brückenschaltung 4 des Gleichrichters 33 kann jedoch anstatt der Leistungshalbleiterschalter 10 Leistungsdioden aufweisen, somit als Dioden-Brückenschaltung betrieben werden (in FIG 1 nicht gezeigt), so dass der Multilevel-Umrichter mittels eines Vienna-Gleichrichters - unter Anwendung des erfindungsgemäßen Symmetrierungsverfahrens - zum Einsatz kommt.

Der Gleichspannungskreis 2 weist zwischen den Gleichspannungsphasen DC+,DC- zwei in Reihe geschaltete Kondensatoren 6,7 - einen ersten Kondensator 6 und einen zweiten Kondensator 7 - auf, welche gemeinsam einen Symmetriepunkt 22 ausbilden.

Über dem ersten Kondensator 6 fällt die erste Teilspannung U_{DC1} der Gleichspannung U_{DC} und über dem zweiten Kondensator 7 die zweite Teilspannung U_{DC2} der Gleichspannung U_{DC} des Gleichspannungskreises 2 ab.

Die Wechselspannungsphasen L1,L2,L3 des Wechselspannungsnetzes 5 sind eingangsseitig des Multilevel-Umrichters 3 mit der ersten bidirektionalen Schaltvorrichtung 8 des Gleichrichters 33 elektrisch verbunden (eingangsseitig der ersten bidirektionalen Schaltvorrichtung 8), wobei die erste bidirektionale Schaltvorrichtung 8 ausgangsseitig mittels einer elektrischen Sternpunkt-Verbindung mit dem Symmetriepunkt 22 verbunden ist.

Die Wechselspannungsphasen U,V,W des elektrischen Verbrauchers 13 oder des elektrischen Erzeugers 23 oder des elektrischen Netzes 14 sind ausgangsseitig des Multilevel-Umrichters 3 mit einer zweiten bidirektionalen Schaltvorrichtung 27 des Wechselrichters 34 elektrisch verbunden (ausgangsseitig der zweiten bidirektionalen Schaltvorrichtung 27), wobei die zweite bidirektionale Schaltvorrichtung 27 eingangsseitig mittels einer elektrischen Sternpunkt-Verbindung mit dem Symmetriepunkt 22 verbunden ist.

Sowohl die erste wie auch die zweite bidirektionale Schaltvorrichtung 8,27 weisen Leistungshalbleiterschalter auf, wobei die bidirektionalen Schaltvorrichtungen 8,27 dazu ausgebildet sind, für den Multilevel-Umrichters 3 am Symmetriepunkt 22 ein Spannungslevel einzustellen und einen vom einem der oberschwingungsbehafteten Zusatzstromwerte I_{Zmod},I_{Zadd} ausgebildeten oberschwingungsbehafteten Stromwert I_{Z} zum Symmetriepunkt 22 zu führen.

Der Multilevel-Umrichter 3 ist ausgehend vom Wechselspannungsnetz 5 als Einspeisung für den elektrischen Verbraucher 13 oder das elektrische Netz 14 betreibbar. Demgegenüber ist der Multilevel-Umrichter 3 ausgehend vom elektrischen Erzeuger 23 oder dem elektrischen Netz 14 in FIG 1 als Rückspeisung in das Wechselspannungsnetz 5 betreibbar.

Ausgehen vom Betrieb Einspeisung vs. - soweit möglich - Rückspeisung des Multilevel-Umrichters 3, und somit des Gleichrichters 33, wird das Symmetrierungsverfahren 1 und die das Symmetrierungsverfahren 1 durchführende Symmetrierungsvorrichtung 11 beispielhaft anhand der Einspeisung elektrischer Energie betrachtet.

Der oberschwingungsbehaftete Zusatzstromwert I_{Z} beaufschlagt den Wirkstromsollwert I_{Wsoll} für einen zu erzielenden Wirkstroms I_{W}, wobei der Wirkstromsollwert I_{Wsoll} mit dem zu multiplizierenden oberschwingungsbehafteten Zusatzstromwert I_{Zmod} - als oberschwingungsbehafteter Zusatzstromwert lz - oder dem zu addierenden oberschwingungsbehafteten Zusatzstromwert I_{Zadd} - als oberschwingungsbehafteter Zusatzstromwert I_{Z} - in Abhängigkeit einer ermittelten Spannungsdifferenz ΔU_{DC12} der Teilspannungen U_{DC1},U_{DC2} an den jeweiligen Kondensatoren 6,7 des Gleichspannungskreises 2 beaufschlagt wurde.

In Abhängigkeit der ermittelten Spannungsdifferenz ΔU_{DC12} wird der erste Kondensator 6 oder der zweite Kondensator 7 mittels des oberschwingungsbehafteten Zusatzstromwerts I_{Z} derart geladen, dass sich eine Symmetrie der beiden Teilspannungen U_{DC1},U_{DC2} der Gleichspannung U_{DC} am Gleichspannungskreis 2 einstellt.

Der Multilevel-Umrichter gemäß FIG 1 weist eine Recheneinheit 12 auf, welche Ansteuersignale für die Leistungshalbleiterschalter 10 sowohl der ersten Brückenschaltung 4 des Gleichrichters 33, wie auch der zweiten Brückenschaltung 19 des Wechselrichters 34, ermittelt und an die Leistungshalbleiterschalter 10 übermittelt. Ferner werden auch Ansteuersignale für die Leistungshalbleiterschalter der bidirektionalen Schaltvorrichtungen 8,27 des Gleichrichters 33 bzw. des Wechselrichters 34 von der Recheneinheit 12 ermittelt und an deren jeweilige Leistungshalbleiterschalter übermittelt.

Die Recheneinheit 12 weist einen Symmetrierungsregler 15 auf, welcher den auf den Wirkstromsollwert I_{Wsoll} des Wirkstroms I_{W} zu multiplizierenden oberschwingungsbehafteten Zusatzstromwert I_{Zmod} oder den zu addierenden oberschwingungsbehafteten Zusatzstromwert I_{Zadd} in Abhängigkeit einer ermittelten Spannungsdifferenz ΔU_{DC12} der Teilspannungen U_{DC1},U_{DC2} an den jeweiligen Kondensatoren 6,7 als oberschwingungsbehafteter Zusatzstromwert I_{Z} ermittelt und für eine Einstellung der Symmetrie der Teilspannungen U_{DC1},U_{DC2} einstellt.

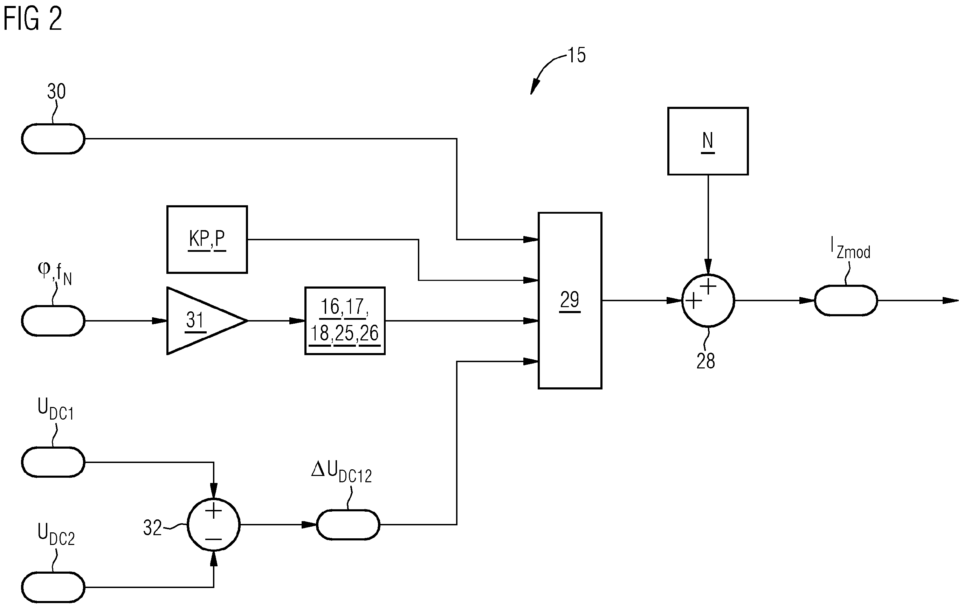

In FIG 2 wird eine erste schematische Darstellung eines Symmetrierungsreglers 15 der Symmetrierungsvorrichtung 11 zur Ausführung des erfindungsgemäßen Symmetrierungsverfahrens gemäß FIG 1 aufgezeigt.

Der Symmetrierungsregler 15 bildet im Ausführungsbeispiel der FIG 2 den im Weiteren mit dem Wirkstromsollwert (hier nicht dargestellt) zu multiplizierenden oberschwingungsbehafteten Zusatzstromwert I_{Zmod}, wobei im Ergebnis der vom oberschwingungsbehafteten Zusatzstromwert abhängige Stromwert erzeugt wird (hier nicht dargestellt).

Dazu weist der Symmetrierungsregler 15 ein Multiplikationsglied 29 auf, welches mehrere Eingangsgrößen miteinander multipliziert.

Eine erste Eingangsgröße bestimmt ein 3-Faches der Netzfrequenz f_{N} oder des Netzwinkels φ_{N} des Wechselspannungsnetzes 5 als Argument einer Rechteck-Funktion 16, einer Cosinus-Funktion 17 oder einer Sinus-Funktion 25 oder des Arguments einer ungeradzahlige Potenz 18 der Cosinus-Funktion 17, der Sinus-Funktion 25 oder der Kombination 26 aus Sinus-Funktion und Cosinus-Funktion.

Eine zweite Eingangsgröße bestimmt ein Differenzbildungsglied 32 zur Bestimmung der Spannungsdifferenz ΔU_{DC12} der Teilspannungen U_{DC1},U_{DC2} an den Kondensatoren des Gleichspannungskreises.

Eine dritte Eingangsgröße bestimmt einen Proportionalanteil KP für einen Proportionalregler P.

Eine vierte Eingangsgröße bestimmt ein Vorzeichenglied 30, welches angibt, ob für die Symmetrierung der Teilspannungen U_{DC1},U_{DC2} an den jeweiligen Kondensatoren des Gleichspannungskreises vom Multilevel-Umrichter bzw. beispielhaft dem Gleichrichter die Einspeisung oder - soweit möglich - die Rückspeisung betrieben wird.

Das Ergebnis der Multiplikation der genannten vier Eingangsgrößen aus dem Multiplikationsglied 29 wird mittels eines Addierglieds 28 mit einem Normierungsglied N addiert, wobei der mit dem Wirkstromsollwert zu multiplizierende oberschwingungsbehaftete Zusatzstromwert I_{Zmod} erzeugt wird.

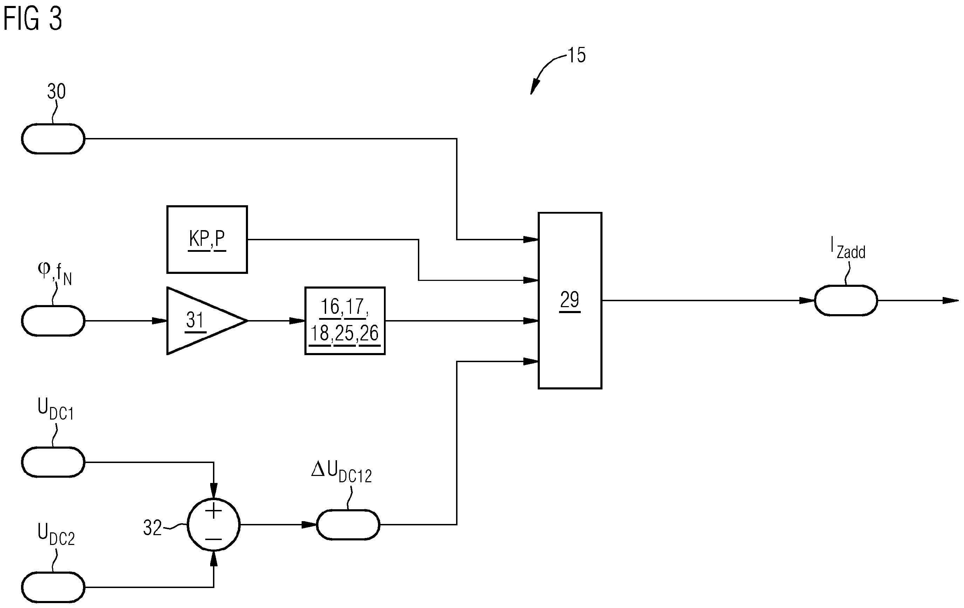

Mittels der FIG 3 wird eine weitere schematische Darstellung eines Symmetrierungsreglers 15 der Symmetrierungsvorrichtung 11 zur Ausführung des erfindungsgemäßen Symmetrierungsverfahrens gemäß FIG 1 aufgezeigt, welche im Wesentlichen analog zur FIG 2 zu betrachten ist.

Der Symmetrierungsregler 15 bildet im Ausführungsbeispiel der FIG 3 den im Weiteren mit dem Wirkstromsollwert (hier nicht dargestellt) zu addierenden oberschwingungsbehafteten Zusatzstromwert I_{Zadd}, wobei im Ergebnis der vom oberschwingungsbehafteten Zusatzstromwert abhängige Stromwert erzeugt wird (hier nicht dargestellt).

Dazu weist der Symmetrierungsreglers 15 ein Multiplikationsglied 29 auf, welches mehrere Eingangsgrößen miteinander multipliziert.

Eine erste Eingangsgröße bestimmt ein 3-Faches der Netzfrequenz f_{N} oder des Netzwinkels φ_{N} des Wechselspannungsnetzes 5 als Argument einer Rechteck-Funktion 16, einer Cosinus-Funktion 17 oder einer Sinus-Funktion 25 oder des Arguments einer ungeradzahlige Potenz 18 der Cosinus-Funktion 17, der Sinus-Funktion 25 oder der Kombination 26 aus Sinus-Funktion und Cosinus-Funktion.

Eine zweite Eingangsgröße bestimmt ein Differenzbildungsglied 32 zur Bestimmung der Spannungsdifferenz ΔU_{DC12} der Teilspannungen U_{DC1},U_{DC2} an den Kondensatoren des Gleichspannungskreises.

Eine dritte Eingangsgröße bestimmt einen Proportionalanteil KP für einen Proportionalregler P.

Eine vierte Eingangsgröße bestimmt ein Vorzeichenglied 30, welches angibt, ob für die Symmetrierung der Teilspannungen U_{DC1},U_{DC2} an den jeweiligen Kondensatoren des Gleichspannungskreises vom Multilevel-Umrichter bzw. beispielhaft dem Gleichrichter die Einspeisung oder - soweit möglich - die Rückspeisung betrieben wird.

Das Ergebnis der Multiplikation der genannten vier Eingangsgrößen des Multiplikationsglieds 29 erzeugt den mit dem Wirkstromsollwert zu addierenden oberschwingungsbehafteten Zusatzstromwert I_{Zadd}.

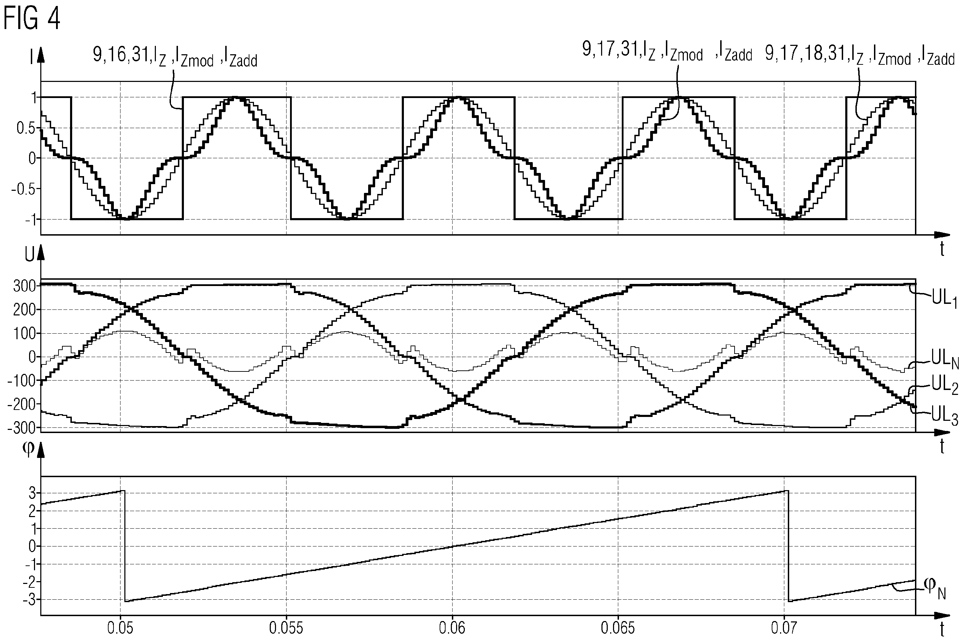

FIG 4 visualisiert eine schematische Diagrammdarstellung von Signalverläufen für das erfindungsgemäße Symmetrierungsverfahren gemäß FIG 1.

Das erste Teildiagramm zeigt über eine Zeit t Stromverläufe I von ermittelten Signalverläufen 9 des zu multiplizierenden oberschwingungsbehafteten Zusatzstromwerts I_{Zmod} bzw. des zu addierenden oberschwingungsbehafteten Zusatzstromwerts I_{Zadd} sowie des von dem oberschwingungsbehafteten Zusatzstromwert abhängigen Stromwerts I_{Z} auf Basis der Rechteck-Funktion 16, der Cosinus-Funktion 17 und der ungeradzahligen Potenz der Cosinus-Funktion (hier der 3. Potenz) i.V.m. deren jeweiliger Argumente als 3-Fachem 31 der Netzfrequenz bzw. des Netzwinkels φ_{N} des Wechselspannungsnetzes.

Das zweite Teildiagramm zeigt über die Zeit t sich einstellende Spannungsverläufe U der Wechselspannungen U_{L1},U_{L2},U_{L3} sowie eine eingestellte Nullsystemspannung U_{N} am Wechselspannungsnetz eingangsseitig des Multilevel-Umrichters bzw. des geregelten Gleichrichters.

Das dritte Teildiagramm zeigt über die Zeit t einen Winkelverlauf φ des Netzwinkels φ_{N} für eine Periode der Wechselspannungen U_{L1},U_{L2},U_{L3}.

## Patentansprüche

1. Symmetrierungsverfahren (1) zur Symmetrierung von Teilspannungen (U_{DC1},U_{DC1}) elektrischer Kondensatoren (6,7) am Gleichspannungskreis (2) eines Multilevel-Umrichters (3) mit einem Gleichrichter (33), wobei
- der Gleichrichter (33) zwischen einem Wechselspannungsnetz (5) und dem Gleichspannungskreis (2) betrieben wird,
- ein erster Kondensator (6) und ein elektrisch mit dem ersten Kondensator (6) in Reihe verschalteter zweiter Kondensator (7), welche einen Symmetriepunkt (22) ausbilden, zwischen einer ersten und zweiten Gleichspannungsphase (DC+, DC-) des Gleichspannungskreises (2) an einer Gleichspannung (U_{DC}) betrieben werden,
- ein Wirkstromsollwert (I_{Wsoll}) für einen Wirkstrom (Iw) des Wechselspannungsnetzes (5) mit einem oberschwingungsbehaftetem Zusatzstromwert (I_{Z}) beaufschlagt wird und
- eine erste Teilspannung (U_{DC1}) der Gleichspannung (U_{DC}) am ersten Kondensator (6) und/oder eine zweite Teilspannung (U_{DC2}) der Gleichspannung (U_{DC}) am zweiten Kondensator (7) in Abhängigkeit des oberschwingungsbehafteten Zusatzstromwerts (I_{Z}) am Symmetriepunkt (22) zur Erzeugung einer Symmetrie zwischen der ersten Teilspannung (U_{DC1}) und der zweiten Teilspannung (U_{DC2}) verändert werden/wird.

2. Symmetrierungsverfahren (1) nach Anspruch 1, wobei der oberschwingungsbehaftete Zusatzstromwert (I_{Z}) in Abhängigkeit einer mit einem Differenzbildungsglied (32) ermittelten Spannungsdifferenz (ΔU_{DC12}) der Teilspannungen (U_{DC1},U_{DC2}) eingestellt wird.

3. Symmetrierungsverfahren (1) nach einem der Ansprüche 1 oder 2, wobei der oberschwingungsbehaftete Zusatzstromwert (I_{Z}) in Abhängigkeit von einem mindestens 3-Fachen (31) einer Netzfrequenz (f_{N}) oder eines Netzwinkels (φ) des Wechselspannungsnetzes (5) ausgebildet ist.

4. Symmetrierungsverfahren (1) nach Anspruch 3, wobei der oberschwingungsbehaftete Zusatzstromwert (I_{Z}) mit dem mindestens 3-Fachen (31) der Netzfrequenz (f_{N}) oder des Netzwinkels (φ) des Wechselspannungsnetzes (5) als Rechteck-Funktion (16) oder Sinus-Funktion (25) oder Cosinus-Funktion (17) oder als Kombination (26) von Sinus-Funktion und Cosinus-Funktion ausgebildet ist.

5. Symmetrierungsverfahren (1) nach Anspruch 4, wobei der mit dem mindestens 3-Fachen (31) der Netzfrequenz (f_{N}) oder des Netzwinkels (φ) des Wechselspannungsnetzes (5) als Sinus-Funktion (25) oder als Cosinus-Funktion (17) oder als Kombination (26) von Sinus-Funktion und Cosinus-Funktionen ausgebildete oberschwingungsbehaftete Zusatzstromwert (I_{Z}) eine ungeradzahlige Potenz (18), insbesondere eine dritte Potenz, der Sinus-Funktion (25) oder der Cosinus-Funktion (17) oder der Kombination (26) von Sinus-Funktion und Cosinus-Funktionen aufweist.

6. Symmetrierungsverfahren (1) nach einem der Ansprüche 3 bis 5, wobei der oberschwingungsbehaftete Zusatzstromwert (I_{Z}) abhängig von einer Nullsystemspannung (U_{N}) des Wechselspannungsnetzes (5) ist.

7. Symmetrierungsverfahren (1) nach einem der vorhergehenden Ansprüche, wobei der oberschwingungsbehaftete Zusatzstromwert (I_{Z}) in Abhängigkeit einer mittels des Wirkstroms (Iw) eingespeisten oder - falls möglich - rückgespeisten Wirkleistung am Gleichrichter (33) vorzeichenbehaftet ist.

8. Symmetrierungsverfahren (1) nach einem der vorhergehenden Ansprüche, wobei der oberschwingungsbehaftete Zusatzstromwert (I_{Z}) zumindest mittels einer Proportionalverstärkung (KP) eines Proportionalreglers (P) gebildet wird.

9. Symmetrierungsverfahren (1) nach einem der vorhergehenden Ansprüche, wobei der oberschwingungsbehaftete Zusatzstromwert (I_{Z}) als zu addierender oberschwingungsbehafteter Zusatzstromwert (I_{Zadd}) mit dem Wirkstromsollwert (I_{Wsoll}) addiert wird.

10. Symmetrierungsverfahren (1) nach einem der Ansprüche 1 bis 8, wobei der oberschwingungsbehaftete Zusatzstromwert (I_{Z}) mittels eines Normierungsglieds (N) als zu multiplizierender oberschwingungsbehafteter Zusatzstromwert (I_{Zmod}) mit dem Wirkstromsollwert (I_{Wsoll}) multipliziert wird.

11. Symmetrierungsverfahren (1) nach einem der vorhergehenden Ansprüche, wobei der mit dem oberschwingungsbehafteten Zusatzstromwert (I_{Z}) beaufschlagte Wirkstromsollwert (I_{Wsoll}) mittels einer d/q-Transformation ermittelt wird.

12. Symmetrierungsverfahren (1) nach einem der Ansprüche 1 bis 10, wobei der mit dem oberschwingungsbehafteten Zusatzstromwert (I_{Z}) beaufschlagte Wirkstromsollwert (I_{Wsoll}) mittels einer Alpha-/Beta-Transformation oder mittels einer komplexen Berechnung des Wechselspannungsnetzes (5), welches insbesondere dreiphasig ausgebildet ist, ermittelt wird.

13. Symmetrierungsvorrichtung (11), ausgebildet zur Durchführung eines Symmetrierungsverfahrens (1) nach einem der vorhergehenden Ansprüche 1 bis 12, aufweisend den Gleichrichter (33) des Multilevel-Umrichters (3) und den ersten und zweiten Kondensator (6,7) am Gleichspannungskreis (2), wobei der Gleichrichter (33) für den Betrieb zwischen dem Wechselspannungsnetz (5) und dem Gleichspannungskreis (2) elektrisch verschaltbar ist und der erste Kondensator (6), elektrisch in Reihe verschaltet mit dem zweiten Kondensator (7), zwischen der ersten und zweiten Gleichspannungsphase (DC+,DC-) des Gleichspannungskreises (2) elektrisch verbunden ist.

14. Symmetrierungsvorrichtung (11) nach Anspruch 13, aufweisend eine Recheneinheit (12) mit einem Symmetrierungsregler (15) auf, ausgebildet zur Durchführung des Symmetrierungsverfahrens (1).

15. Multilevel-Umrichter (3) mit einer Symmetrierungsvorrichtung (11) nach einem der Ansprüche 13 oder 14, wobei der Multilevel-Umrichter (3) für einen Betrieb eines elektrischen Verbrauchers (13) oder eines elektrischen Erzeugers (23) oder eines elektrischen Netzes (14) an einem Wechselspannungsnetz (5) ausgebildet ist.
